# EUROPEAN PATENT APPLICATION

(11) **EP 4 016 178 A1**
(43) Date of publication of application: **22.06.2022**
(21) Application number: 20306583.4
(22) Date of filing: 16.12.2020
(51) Int. Cl.: G02F 1/153, G02F 1/155

(54) **MULTILAYER STRUCTURE, ELECTROCHROMIC CELL AND OPHTHALMIC DEVICE INCORPORATING IT, AND METHODS FOR MANUFACTURING THE SAME**

(71) Applicant: ESSILOR INTERNATIONAL, 94220 Charenton-Le-Pont (FR)
(72) Inventor: BIVER, Claudine, 94220 CHARENTON LE PONT (FR); ARCHAMBEAU, Samuel, 94220 CHARENTON-LE-PONT (FR); CANO, Jean-Paul, 94220 CHARENTON-LE-PONT (FR)
(74) Representative: Plasseraud IP

(57) **Abstract**

The invention relates to a multilayer structure for an electrochromic cell, to a electrochromic cell and an ophthalmic device incorporating the multilayer structure, to corresponding uses of the multilayer structure, and to methods for manufacturing the multilayer structure, the electrochromic cell and the ophthalmic device.

The multilayer structure comprises:
- a transparent flexible substrate (30) comprising a thermoplastic polymeric film (39), the flexible substrate (30) having two main surfaces, at least one of which is configurated to be a barrier (38) to at least one of oxygen, water vapor and solvents, and
- at least one electrically conductive layer (31) which surmounts the flexible substrate (30) to form a flexible first part of the electrochromic cell, the at least one electrically conductive layer (31) being configured to form an electrode of the electrochromic cell and comprising a deformable electrically conductive nanostructure.

According to the invention, said flexible first part is formed to a curved shape (34) defined by a first curvature including at least one of a cylindrical, toric and spherical curvature.

## Description

### FIELD OF THE INVENTION

The present invention relates to a multilayer structure for an electrochromic cell, to a electrochromic cell and an ophthalmic device incorporating the multilayer structure, to corresponding uses of the multilayer structure, and to methods for manufacturing the multilayer structure, the electrochromic cell and the ophthalmic device. The invention particularly applies to electrochromic cells for smart eyewear, such as electrochromic ophthalmic lenses which may be spectacle glasses, sport goggles or augmented reality devices, for instance.

### DESCRIPTION OF RELATED ART

In a known manner, an electrochromic (EC) cell typically has a structure comprising two transparent outer layers made of organic or mineral material, on which transparent electrically conductive coatings are deposited on inner faces thereof so as to form electrodes. An EC composition fills a cavity formed between the facing electrically conductive coatings, the EC composition comprising at least one oxidizing compound and at least one reducing compound that will respectively be reduced and oxidized when an electric field is applied between the electrodes of the cell. Alternatively, only one electrically conductive coating may be provided on a same outer layer, in which case this conductive coating is divided into two electrodes by structuration on this same outer layer, for instance with a comb-like structure or an interdigitated structure. At least one of these oxidizing and reducing compounds is an EC compound. It is thus possible to vary the light transmission value of the cell by applying this electric field. The support of the two transparent outer layers and the sealing of the cavity is usually achieved by means of a peripheral seal.

The EC compound is a material having electrochromic properties, i.e. that changes color between its reduced and oxidized state. It can be a mixture of different EC compounds. When an EC compound is reduced or oxidized, there needs to be another redox active compound that can give or accept the electrons that the EC compound respectively accepts or gives. This other redox active compound can itself be an EC compound.

With such EC cells, it is possible to control the redox state and hence the color of the EC compounds in the cell by applying an electric field between the electrodes. Combining several EC compounds in an EC cell can be useful to adjust the color of the cell when no electric field is applied between the electrodes (passive state) and when such an electric field is applied (active state).

EC cells, which are thus based on oxydoreduction reactions in the electrochromic composition resulting from this electric field, are known to be sensitive to oxygen and humidity. To protect those cells, gas barrier layers are often used which are usually deposited by roll-to-roll methods on flat films. Also usually, coatings of a transparent conductive oxide (TCO, e.g. an ITO coating) may be deposited on EC plastic substrates by sputtering to obtain a flat film. Some problems arise when such a flat film incorporating this barrier layer and/or this electrically conductive coating is to be laminated on a curved surface (for instance cylindrical, toric or spherical), due to the fact that good barrier layers and electrically conductive TCO coatings (e.g. ITO) both usually contain inorganic layers that are brittle and tend to crack when bent or curved.

Specifically, with EC plastic substrates, such conductive ITO coatings must be applied at low temperature, and under this condition, layers of ITO having a high thickness are needed to obtain a sufficiently low sheet resistance. Nonetheless, as ITO is a brittle material very sensitive to cracking when deformed, both barrier layers and conductive coatings undergo cracks after a deformation and therefore may lose their performances. Additionally, when a TCO coating is applied onto the inorganic barrier layer, due to its high thickness, it usually proves to be even more sensitive to cracking.

US 9 766 528 B2 and WO 2016/145120 A1 each disclose an electrochromic device preferably for a vehicle mirror, including:
- a first flexible or rigid plastic substrate including front and rear surfaces, wherein the rear surface comprises a first conductive material and the front and/or rear surface(s) comprise(s) a gas diffusion barrier; and
- a second flexible or rigid plastic substrate including front and rear surfaces, wherein the front surface comprises a second conductive material,
wherein the first substrate is joined to the second substrate by a sealing member, where the rear surface of the first substrate and the front surface of the second substrate with the sealing member define a chamber therebetween.

Specifically, these documents teach that the conductive material may be a nanowire coating or a metal mesh, but only teach in the disclosed examples to laminate a mineral glass film on an organic polymer substrate to provide the gas diffusion barrier, so as to obtain a flat laminate for the electrochromic device.

A major drawback of such an electrochromic device is that the disclosed polymer-glass laminates for a vehicle mirror having a flat shell are not aimed at obtaining curved electrochromic devices, such as including spherical, toric or cylindrical ophthalmic lenses, nor *a fortiori* at obtaining prescription lenses for power correction. Indeed, no curved polymer-glass laminate is disclosed in both documents.

Further, it may be difficult, starting from the flat laminates disclosed in both documents, to obtain a curved polymer-glass laminate in which the glass film precisely conforms to the curvature of the polymer substrate, due to the well-known fact that glass is brittle at room temperature, may require a higher temperature for the laminate to be shaped and tends to crack when bent or curved, which renders the curved-shaping process complex and not fully satisfactory. Moreover, the use of a glass film may generate a failure in the curved polymer-glass laminate because of the inherent rigidity of the glass film, which hinders its fitting in a fully conforming manner to the curvature of a polymeric ophthalmic lens.

Therefore, the polymer-glass laminates disclosed in both documents may generate, when subsequently shaped to a desired curvature, an undesirable power error which is a significant concern for ophthalmic glasses, since a wearer of a prescription lens must knowingly have a lens power error of less than 0.12D according to the ISO standard on power tolerance.

Most of manufactured EC devices, such as rear view mirrors, are currently available in mineral glass, which is known to be a good barrier to oxygen and humidity, and such commercial EC mineral devices usually incorporate a transparent electrically conductive coating (e.g. of ITO) which is deposited by sputtering, directly on the flat or curved mineral glass.

### SUMMARY OF THE INVENTION

An object of the invention is to overcome at least the above-mentioned drawbacks, by providing a multilayer structure for an electrochromic cell, the multilayer structure comprising:
- a transparent flexible substrate comprising a thermoplastic polymeric film, the flexible substrate having two main surfaces, at least one of which is configurated to be a barrier to at least one of oxygen, water vapor and solvents (i.e. a barrier to oxygen and/or water vapor and/or a solvent), and
- at least one electrically conductive layer which surmounts the flexible substrate to form a flexible first part of the electrochromic cell, the at least one electrically conductive layer being configured to form an electrode of the cell and comprising a deformable electrically conductive nanostructure,
the multilayer structure being capable of being laminated onto a transparent rigid substrate, such as a plastic ophthalmic lens satisfying a prescription for power correction, to form a curved laminate having a first curvature precisely conforming to a second curvature of the rigid substrate which may be identical to or slightly different from the first curvature, so that an electrochromic optical device possibly devoid of glass material incorporating this multilayer structure may be formed.

According to the invention, the multilayer structure is such that said flexible first part is formed to a curved shape defined by a first curvature including at least one of a cylindrical, toric and spherical curvature.

It is to be noted that in the present invention, "formed" means the result of any forming process, for example meaning thermoformed by a thermoforming process applied to a formable (e.g. thermoformable) flexible first part, or alternatively formed at low or room temperature.

It is also to be noted that a multilayer structure of the invention incorporating this formed flexible first part allows to obtain an electrochromic curved shell having any desired base curve determined in relation to a specific total lens power required for a prescription ophthalmic lens, contrary to the flat shell disclosed in the above documents incorporating a polymer-glass barrier laminate and an electrically coating conductive coating, which do not comply with a forming process.

According to another feature of the invention, the flexible substrate may further comprise a deformable barrier coating in contact with the polymeric film on said at least one of the main surfaces, the deformable barrier coating forming said barrier to at least one of oxygen, water vapor and solvents and preferably being:
- based on at least one polymer derived from alcohol units, such as a copolymer of ethylene and vinyl alcohol (EVOH) or a poly(vinyl alcohol) (PVA),
- an adhesive layer based on at least one polymer not derived from alcohol units, such as a polyisobutylene (PIB), or
- an inorganic or hybrid organic/inorganic gas barrier coating for example selected from Al₂0₃, Si₃N₄, SN, TiN, SiOₓN_{y}, indium tin oxide (ITO), Si0₂, Zn0₂, and Ti0₂, where x and y are greater than 0 and lower than or equal to 4.

Such gas diffusion barriers may be applied to the substrate by physical vapor deposition such as vacuum evaporation or sputtering, plasma-enhanced chemical vapor deposition (PECVD), atomic layer deposition (ALD), or by neutral beam assisted sputtering (NBAS).

It is to be noted that the flexible substrate thus mainly consists of a thermoplastic material, being advantageously devoid of any mineral glass material contrary to the flexible substrates disclosed in the above documents.

According to a preferred embodiment of the invention, the multilayer structure may further comprise a transparent rigid substrate of thermoplastic, thermosetting or mineral glass material, which is more rigid than said first flexible first part and onto which said flexible first part conforms by lamination with an optically transparent adhesive, said transparent rigid substrate preferably being thermoplastic or thermosetting, so that the multilayer structure is fully devoid of mineral glass.

It may be noted that this lamination on such a transparent rigid substrate may not be required in the present invention, if said flexible first part is sufficiently rigid for the targeted application.

Advantageously, the adhesive, preferably a pressure-sensitive adhesive or a barrier to oxygen, water vapor or solvents for example comprising a polyisobutylene (PIB), may directly contact said deformable barrier coating or said polymeric film, preferably directly contacting said deformable barrier coating to protect the same from scratches.

It may be noted that this adhesive may alternatively directly contact said polymeric film instead, which film in that case is located between and in contact with the adhesive and the deformable barrier coating.

More preferably according to this preferred embodiment, the transparent rigid substrate may be defined by a second curvature including at least one of a cylindrical, toric and spherical curvature identical to or different from said first curvature, such as a progressive surface, said rigid substrate being an ophthalmic lens or a semi-finished lens selected from piano lenses and prescription lenses satisfying a prescription for power correction and having a concave main face and a convex main face, said flexible first part contacting the concave main face and/or the convex main face.

Even more preferably, the resulting multilayer structure incorporating this flexible first part - transparent rigid substrate mainly consists of a thermoplastic material or of thermoplastic-thermosetting composite (for a thermosetting rigid substrate in this latter case), thus being devoid of any mineral glass layer.

According to an exemplary embodiment common to any of the foregoing features, the thermoplastic polymeric film may be selected from:
- triacetate of cellulose (TAC),
- polyesters, such as polyethylene furanoate (PEF), polyethylene terephthalate (PET) or polyethylene naphthalate (PEN),
- copolyesters (COPE),
- polycarbonate (PC),
- cyclic olefin copolymers (COC),
- cyclic olefin polymers (COP), and
- multilayer films of at least one of these polymers, and/or of at least one of a copolymer of ethylene and vinyl alcohol (EVOH), a poly(vinyl alcohol) (PVA), a polychlorotrifluoroethylene (PCTFE), a polyvinylidene chloride (PVDC) and a polyamide (PA).

It is to be noted that the thermoplastic polymeric film may thus be based on at least one transparent thermoplastic polymer which exhibits sufficient deformability and possibly barrier properties to oxygen and/or water vapor and/or solvents.

It is also to be noted that the thermoplastic polymeric film of the invention may have a thickness of between 10 µm to 500 µm for instance and preferably of between 40 µm and 300µm, although other thicknesses are usable provided that this film be sufficiently deformable, being for example deformable to a curvature of about 100 mm.

According to another exemplary embodiment independently common to any of the foregoing features, said at least one electrically conductive layer of said flexible first part may comprise:
- a deformable electrically conductive nanostructure comprising a metal and selected from nanomeshes, nanowires and nanogrids and being treated with a passivation layer to avoid reaction of the metal with an electrochromic formulation of the electrochromic cell (e.g. the undesirable reaction between silver and an EC oxidizing compound), or
- a stack of insulator layer (l1) - metal layer (M) - insulator layer (l2), where M is for example silver, gold or copper (silver being preferred) and l1 is equal to or different from l2,
the insulator layer (l2) which is in contact with the electrochromic formulation comprising a transparent conductive oxide (TCO), for example indium tin oxide (ITO), and
the other insulator layer (l1) which is in contact with the substrate comprising a transparent conductive oxide (TCO), for example indium tin oxide (ITO), or being a non-conductive layer for example able to increase light transmission through the stack (i.e. an adaptative layer whose refractive index helps to increase said light transmission) or able to form a barrier layer.

These nanomeshes and nanowires may be obtained by methods known in the art, including the deposition of a layer of a suspension of the nanostructure in a solvent and subsequent solvent removal, e.g. by drying. Nanogrids may be obtained by photolithography methods applied on metallic layers, as known in the art.

It is to be noted that these metal nanomeshes, nanowires or nanogrid layers used as an electrically conductive layer are advantageously also capable of sustaining a high level of deformation without losing their electrical conductivity compared to existing TCO brittle materials, like e.g. ITO thick coatings conventionally deposited by sputtering.

Advantageously, the or each passivation layer may be:
- deposited on the or each deformable electrically conductive nanostructure forming said at least one electrically conductive layer, the passivation layer preferably being an electrically conductive polymer layer such as PEDOT, a gold, rhodium, platinum or palladium-based coating or a transparent conductive oxide (TCO) coating, or else may be
- directly included in said at least one electrically conductive layer, preferably being a mixture of the deformable electrically conductive nanostructure and of an electrically conductive polymer layer, or a mixture of the deformable electrically conductive nanostructure and of a transparent conductive oxide (TCO).

In a known way, TCOs are inorganic metal oxides with good electrical conductivities. TCO that can be used in the passivation layer of the invention are generally doped metal oxides with a formula comprising oxygen atoms and at least two other elements in various proportions, such as ATO (AISnO), ATZO (AISnZnO), AZO (AlZnO), FTO (FSnO), GZO (GaZnO), ITO (InSnO), ITZO (InSnZnO), IZO (InZnO), or mixtures thereof.

It is to be noted that TCO-structured electrodes which are usable for the electrically conductive layer are advantageously much less brittle than a full TCO layer.

It is also to be noted that said at least one electrically conductive layer may advantageously comprise, in the multilayer structure according to the invention, a plurality of such electrically conductive layers which may optionally be of different natures (e.g. of different structures and/or materials), for example comprising an alternation of the electrically nanostructures and of the passivation layers as disclosed above.

As explained above, said thermoplastic polymeric film provided with said deformable barrier coating and with said deformable electrically conductive nanostructure, and optionally with said transparent rigid substrate advantageously of thermoplastic or thermosetting material, allows to make by a forming process durable electrochromic lenses which may be of plastic type, particularly thanks to their respective high deformability which comply with forming without cracking and hence without losing their performances and to their barrier properties. In addition, the use of said film allows to make collective batch coating processes.

An electrochromic cell according to the invention comprises at least two transparent layers having curved inner surfaces which are provided with at least one pair of electrodes facing each other on the two transparent layers or located on the same transparent layer, and which delimit between the electrodes a sealed cavity filled with an electrochromic composition, and the electrochromic cell comprises at least one multilayer structure as defined above, in which:
- at least one electrode of the pair of electrodes comprises one said electrically conductive layer, and
- at least one of said transparent layers comprise one said flexible first part, and optionally further comprises a transparent rigid substrate of thermoplastic, thermosetting or mineral glass material, which is more rigid than said first flexible first part and onto which said first part conforms by lamination with an optically transparent adhesive.

It is to be noted that all types of EC cells of the type comprising an EC composition are usable in the present invention, preferably being of the so-called "all-in-one-type" ECs which are defined for example in Alesanco et al. (Materials 2018, 11, 414) as EC cells where the EC formulation comprises at least one oxidizing compound and at least one reducing compound that will respectively be reduced and oxidized when an electric field is applied between the electrodes (at least one of these oxidizing and reducing compounds being an EC compound).

It may also be noted that the respective facing inner surfaces of said at least two transparent layers may each independently be concave or convex.

Preferably, each of said transparent layers comprises one said flexible first part and optionally one said transparent rigid substrate.

An electrochromic (EC) composition usable in the present invention comprises:
- at least one EC oxidizing agent, preferably selected from mono viologens or bis viologens (i.e 4,4'-bipyridinium salts or bis[4,4'-bipyridinium] salts) such alkylviologens, arylviologens, arylalkylviologens, alkylarylviologens, anthraquinones, benzazoles, imidazo[1,2-α]pyridines, 2,1,3-benzothiadiazoles, imidazoles, benzoselenadiazoles, benzoselenazoles and derivatives thereof, and
- at least one EC reducing compound, preferably chosen from derivatives of ferrocene, derivatives of phenoxazine, derivatives of phenazine, derivatives of phenothiazine, derivatives of thioanthrene, derivatives of tetrathiafulvalene, and mixtures thereof (for example 10-methylphenothiazine (MePhtz)).

Non limiting examples of such viologen compounds or viologen derivatives, more particularly examples of substituted dialkyl, diaryl 4,4'-bipyridinium salts, substituted dialkyl, diaryl bis[4,4'-bipyridinium] salts and mixtures thereof are described in documents EP2848667A1, EP2848668A1, EP2848669A1, EP2848670A1, EP3115433A1 and EP3345981A1 whose teachings are incorporated herein. Preferred examples are mentioned herein, such as 1,1'-bis(3-(tert-butyl)phenyl)[4,4'-bipyridine]-1,1'-diium bis(tetrafluoroborate).

In one preferred embodiment, the redox chemical mixture comprises one said reducing compound (such as 10-methylphenothiazine) and at least one electrochromic oxidizing compound, preferably at least two electrochromic oxidizing compounds, for example two or three electrochromic oxidizing compounds, preferably each electrochromic oxidizing compound being independently selected from substituted dialkyl 4,4'-bipyridinium salts, substituted diaryl 4,4'-bipyridinium salts, substituted dialkyl bis[4,4'-bipyridinium] salts or substituted diaryl bis[4,4'-bipyridinium] salts, more preferably the at least two electrochromic oxidizing compounds being at least a substituted diaryl 4,4'-bipyridinium and at least a substituted diaryl bis[4,4'-bipyridinium].

By way of EC composition, mention may for example be made of a solution comprising a solvent such as propylene carbonate, a thickener such as polymethyl methacrylate, at least one oxidizing agent and reducing agent as defined above, and an electrolyte such as tetra-n-butylammonium tetrafluoroborate (TBA).

In a known manner, at least part of the EC compounds in the EC cell is contained in a liquid or gel which forms the EC composition and which fills the space between the electrodes to ensure the ionic conduction between them, through the electrolyte (which consists in charged species that can comprise the EC material itself and/or other redox active species and/or other ions devoid of EC properties and of redox activity). The EC composition thus gives at least part of its EC properties to the EC cell.

An ophthalmic device according to the invention such as spectacle glasses, sport goggles (e.g. for ski, cycling, motorcycling or other sports using goggles) or an augmented reality device, comprises at least one electrochromic cell as defined above, where said at least two transparent layers each comprise an ophthalmic lens, or alternatively where only one transparent layer is provided on its back side or front side with an ophthalmic lens, the sealed cavity filled by the electrochromic composition being delimited at the periphery by a seal formed from an adhesive material, so that the ophthalmic device meets an ophthalmic prescription of a wearer of the device.

Advantageously and as explained above, said ophthalmic device may include at least one EC ophthalmic lens, e.g. a prescription lens having for instance a convex front surface and a concave rear surface, which lens(es) may essentially consist of thermoplastic or thermosetting materials, being devoid of any mineral glass layer.

Such optical devices of the invention make it possible to modify on demand the color and the transmittance of the device. For example in ski goggles, the lens(es) of the goggles can be an EC cell that the user will render more or less dark depending on the light conditions. Augmented reality devices, where depending on the state of the EC cells, may add or not layers of virtual objects to the real environment. In most cases it is preferred that EC cells have a higher transmittance in the passive state (typically, in the case of ski goggles transmissions of at least 70% are required in the passive state) and become darker in the active state. The EC compounds in EC cells are thus preferentially chosen to be colorless or weakly colored in the passive state. It is also often preferred that the combination of the EC compounds in the EC cell gives a neutral color to the EC cell, such as grey or brown, in particular in the active state of the EC cell.

A use of a multilayer structure according to the invention is for providing an electrochromic cell or an ophthalmic device as discussed above, which is preferably devoid of mineral glass and may include prescription lenses.

A method according to the invention for manufacturing a multilayer structure as defined above, comprises:
forming said flexible first part to a curved shape defined by said first curvature including at least one of a cylindrical, toric and spherical curvature,
either before or after the forming step, cutting the flexible first part to an appropriate shape, such as a lens shape, for the electrochromic cell, and
optionally laminating, with intercalation of an optically transparent adhesive, the formed flexible first part on a transparent rigid substrate of thermoplastic, thermosetting or mineral glass material, such as an ophthalmic lens, so that the formed flexible first part conforms to a concave main face and/or convex main face of the transparent rigid substrate having a curvature that may differ from that of the formed flexible first part, the optically transparent adhesive for example being applied before the forming step on the flexible first part in a flat shape, or being applied on the transparent rigid substrate.

Preferably, the flexible first part is cut to a lens shape before the forming step, which is then implemented after the flexible first part is obtained in a flat shape.

This method for manufacturing a multilayer structure may specifically further comprise:
- before the forming step:
   a) providing in a flat shape the transparent flexible substrate comprising the thermoplastic polymeric film, preferably by depositing a deformable barrier coating forming a barrier (as defined above) to at least one of oxygen, water vapor and solvents in contact with the polymeric film on at least one of said main surfaces; and
- either before or after the forming step:
   b) applying the at least one electrically conductive layer on the flexible substrate to form the flexible first part of the electrochromic cell, the at least one electrically conductive layer comprising a deformable electrically conductive nanostructure comprising a metal and for example selected from nanomeshes, nanowires and nanogrids, and
   c) treating the deformable electrically conductive nanostructure with a passivation layer to avoid reaction of the metal with an electrochromic formulation,
in which steps b) and c) are implemented either successively or simultaneously:
(i) before the forming step, step b) comprising applying the at least one electrically conductive layer on the flexible substrate in a flat shape for example by spray coating, bar coating, screen printing, inkjet coating or spin coating, or
(ii) after the forming step, step b) comprising applying the at least one electrically conductive layer on the curved flexible substrate for example by spray coating, spin coating or inkjet coating.

It is to be noted, in this manufacturing method according to the invention, that said at least one electrically conductive layer may advantageously comprise a plurality of such electrically conductive layers which may optionally be of different natures (e.g. of different structures and/or materials), for example comprising an alternation of the electrically conductive nanostructures and of the passivation layers as disclosed above.

Alternatively, the at least one electrically conductive layer may comprise deformable structured electrodes such as interdigitated electrodes, instead of the deformable electrically conductive nanostructure.

Also alternatively, as explained above for the multilayer structure, said at least one electrically conductive layer may comprise a stack of insulator layer (l1) - metal layer (M) - insulator layer (l2), where M is for example silver, gold or copper (silver being preferred) and where l1 is equal to or different from l2,
the insulator layer (l2) which is in contact with the electrochromic formulation comprising a transparent conductive oxide (TCO), for example indium tin oxide (ITO), and
the other insulator layer (l1) which is in contact with the substrate comprising a transparent conductive oxide (TCO), for example indium tin oxide (ITO), or being a non-conductive layer for example able to increase light transmission through the stack (i.e. an adaptative layer whose refractive index helps to increase said light transmission) or able to form a barrier layer.

In this case, step c) should not be needed except if the l2 layer is not efficient enough to passivate the M layer. Preferably, the deposition of the l1Ml2 stack is carried out by a PVD method, rather than a wet coating deposition method.

Preferably, steps b) and c) are implemented before the forming step, as specified in alternative (i) above.

A method according to a first embodiment of the present invention for manufacturing an electrochromic cell as defined above comprises:
- manufacturing the multilayer structure according to the above method, in which at least one electrode of the pair of electrodes comprises one said electrically conductive layer, and at least one of said transparent layers having curved inner surfaces comprises one said flexible first part and optionally said transparent rigid substrate onto which said flexible first part is laminated with intercalation of the optically transparent adhesive, and
- assembling the multilayer structure to the other transparent layer which is provided with another electrode facing said electrically conductive layer, by filling the sealed cavity between the electrodes filled with an electrochromic composition for instance by a drop filling or backfilling technique.

Preferably, each of said transparent layers comprises one said flexible first part and optionally one said transparent rigid substrate.

According to a second alternative embodiment of the present invention, a method for manufacturing an electrochromic cell as defined above comprises:
- manufacturing a flat electrochromic cell blank, comprising assembling together said flexible first part and a second flexible substrate, and filling the sealed cavity between the electrodes with the electrochromic composition for example by a drop filling technique (e.g. a one-drop filling technique),
- forming the flat electrochromic cell blank thus obtained into a curved lens shape to obtain a curved electrochromic assembly, said flexible first part and said second flexible substrate being optionally cut before obtained said curved electrochromic assembly, and
- laminating, with intercalation of an optically transparent adhesive, said curved electrochromic assembly on a concave main face and/or on a convex main face of at least one said curved transparent rigid substrate, to obtain said electrochromic cell, which is for example formed in between two said curved transparent rigid substrates, one of which is on the concave face of the electrochromic cell and the other one on the convex face thereof.

In this way, it is possible to assemble a whole flat EC cell blank, before laminating or forming it on the concave face and/or on the convex face of the one or two curved rigid substrate(s). The EC cell blank may thus be formed in between two curved rigid substrates as explained above, i.e. like a sandwich.

A method according to the invention for manufacturing an ophthalmic device as defined above comprises manufacturing the electrochromic cell according to the method defined above in said first embodiment or second embodiment, while using an ophthalmic lens for each of said transparent layers having curved inner surfaces.

### BRIEF DESCRIPTION OF THE DRAWINGS

The present invention will be described in more detail by referring to the appended drawings, wherein:
- figure 1 is a perspective view of an ophthalmic device according to an example of the invention;
- figure 2A is a front view of an electrochromic cell of the ophthalmic device of figure 1;
- figure 2B is a schematic cross-sectional view in the plane IIB-IIB of figure 2A;
- figure 3 is a front view of an electrochromic cell according to an example of the invention connected to a control circuit by a conductive intermediate element;
- figure 4 is a schematic cross-sectional view of an electrochromic cell according to the invention in which a control circuit is positioned directly between two connecting elements;
- figure 5 is a schematic diagram showing (not at scale) essential steps of a method for manufacturing an ophthalmic device according to an embodiment of the invention;
- figure 6 is a schematic diagram showing (not at scale) essential steps of a method for manufacturing an ophthalmic device according to another embodiment of the invention; and
- figure 7 is a schematic diagram showing (not at scale) essential steps of a method for manufacturing an ophthalmic device according to still another embodiment of the invention.

### DETAILED DESCRIPTION OF INVENTION AND PREFERRED EMBODIMENTS

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about." Also unless otherwise indicated, the indication of an interval of values « from X to Y » or "between X to Y", according to the present invention, means as including the values of X and Y.

### Exemplary electrochromic cells and ophthalmic devices usable in the invention:

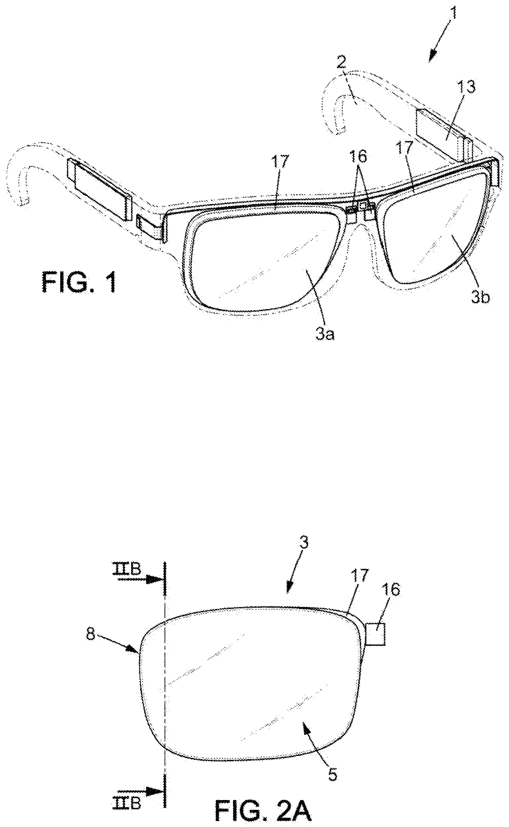

Figures 1-4 and their below description relate to known examples of ophthalmic devices and related electrochromic cells as disclosed in WO 2017/009563 A1, which are usable in the present invention in a non-limiting way as examples of both electrochromic cells and ophthalmic devices.

According to the embodiment represented in figure 1, the ophthalmic device 1 comprises a frame 2 in which two electrochromic cells 3a, 3b are mounted.

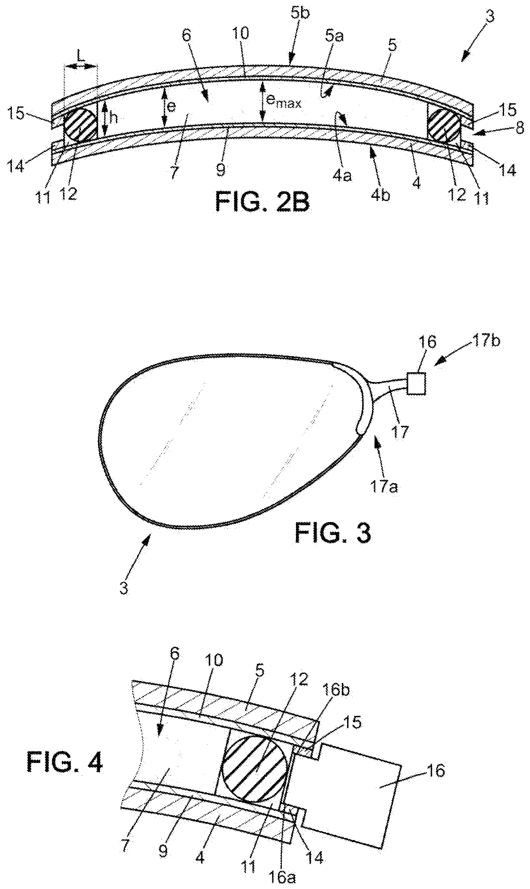

As represented in figure 2B, an electrochromic cell 3 comprises two transparent layers 4, 5, that are advantageously not conductive, delimiting between them a cavity 6 intended to be filled by an electrochromic composition 7.

Thus, each transparent layer 4, 5 comprises an inner face 4a, 5a and an outer face 4b, 5b. Thus, the term "inner" more particularly denotes the faces 4a, 5a delimiting the cavity 6 of the cell 3, and the term "outer" more particularly denotes the faces 4b, 5b outside the cavity 6. The cavity 6 thus has a thickness e between the two inner faces 4a, 5a.

The transparent layers 4, 5 may be layers made of organic or mineral material. The transparent layers 4, 5 may also be chosen to filter the ultraviolet radiation, in particular to absorb wavelengths below 420 nm for example. Generally, the material of the transparent layers 4, 5, or the treatment of the inner 4a, 5a and/or outer 4b, 5b faces thereof may enable the transparent layers 4, 5 to have advantageous features, such as enabling colored reflections, a mirror effect, protection with respect to blue light or protection with respect to infrared radiation, without this list being limiting. These outer faces 4b, 5b may also be coated with anti-scratch coatings, AR coatings, anti-smudge or antifog coatings, primer coatings, etc. According to one embodiment, the transparent layers 4, 5 may be colored, photochromic and/or polarized. According to one embodiment, the transparent layers 4, 5 may be made of a tempered material so as to increase the mechanical strength thereof.

Preferably, the transparent layers 4, 5 have a thickness of between 50µm and 2000µm, or even between 300µm and 1000µm. The transparent layers 4, 5 may for example be spherical shells, and have in particular a spheroid or ovoid shape delimited by a peripheral edge 8. In particular, the transparent layers 4, 5 are preferably ophthalmic lenses that meet, with the electrochromic composition 7 of the cavity 6, an ophthalmic prescription of a wearer of the ophthalmic device 1.

According to the invention, at least one inner face 4a, 5a, in particular both inner faces 4a, 5a, of the transparent layers 4, 5 are curved, i.e. they have a non-zero curvature. For example, the inner faces 4a, 5a of the transparent layers 4, 5 may each be concave or convex. Moreover, the outer faces 4b, 5b of the transparent layers 4, 5 may also be curved, and in particular be concave or convex.

The inner face 4a, 5a of each of the transparent layers 4, 5 is at least partially, and preferably completely, covered by an electrically conductive coating 9, 10 as defined above according to the present invention, i.e. which comprises a deformable electrically conductive nanostructure preferably being based on silver, the metal nanostructure being selected from nanomeshes, nanowires and nanogrids and being treated with a passivation layer to avoid reaction of the metal with an electrochromic formulation of the electrochromic cell (or which comprises instead of this nanostructure, as explained above, a stack of layers l1-M-l2 as defined above, where M is for example silver, gold or copper (silver being preferred) and where l1 is equal to or different from l2,
the insulator layer (l2) which is in contact with the electrochromic formulation comprising a transparent conductive oxide (TCO), for example indium tin oxide (ITO), and
the other insulator layer (l1) which is in contact with the substrate comprising a transparent conductive oxide (TCO), for example indium tin oxide (ITO), or being a non-conductive layer for example able to increase light transmission through the stack (i.e. an adaptative layer whose refractive index helps to increase said light transmission) or able to form a barrier layer.

The cell 3, and in particular the two transparent layers 4, 5, are held together by a peripheral seal 11. The seal 11 thus completely surrounds the cavity 6. The seal 11 makes it possible to ensure a sufficient thickness e of the cell 3, and also a lack of direct contact between the electrically conductive coatings 9, 10 of each of the transparent layers 4, 5.

The seal 11 has a height h, in particular after assembling the cell 3, between a few tens of micrometers and a few hundreds of micrometers, preferably between 20µm and 300µm, or even more specifically between 80µm and 250µm, or even more specifically still between 90 and 220µm. By way of example, the height h of the seal 11 may be equal to around 200µm. This height h corresponds to the thickness e of the cavity 6 in the vicinity of the peripheral edges 8 of the transparent layers 4, 5, in particular of the peripheral edges of the inner faces 4a, 5a.

More specifically, the height h of the seal 11 as represented in figure 2B corresponds to a seal 11 which is not deposited on connecting elements 9, 10 as will be described below. However, in one embodiment in which the seal 11 is deposited, in particular partially, on connecting elements 9, 10, the height h corresponds to the height of the seal 11 and to the height of the connecting elements 9, 10 taken together.

Moreover, the width L of the seal 11 is preferably less than 5000µm for a goggle application or less than 1000µm for an ophthalmic lens, or even less than 3000µm for a goggle and less than 800µm for an ophthalmic lens. Thus, when the ophthalmic device is installed in a frame, the seal will not be visible and will not limit the visual field of the wearer or the useful area of the ophthalmic device.

The term "width" denotes the size of an element extending in a plane substantially parallel to the inner faces 4a, 5a of the transparent layers 4, 5. The term "height" or "thickness" denotes the size of an element extending in a direction substantially transverse to the inner faces 4a, 5a of the transparent layers 4, 5.

The seal 11 is made from an adhesive material 20 which maintains the cohesion between the two transparent layers 4, 5. The adhesive material 20 may be any flexible glue able to sustain the deformation during the selected forming process.

According to an embodiment, the adhesive material 20 may be a flexible glue selected from an acrylate, methacrylate, cyanoacrylate, epoxide, polyurethane, polyisobutylene or silicone glue, preferably a polyisobutylene, cationic epoxy, epoxy-amine, epoxy-anhydride or oxime silicone glue. The adhesive material 20 may alternatively be a pressure sensitive adhesive that can be applied like a hotmelt adhesive solvent-based or not.

The adhesive material 20 may be a light- and/or thermally-polymerizable resin, or a cationically initiated epoxy resin.

The adhesive material 20 is preferably a pressure sensitive adhesive, for example made of a polyisobutylene, if a one-drop filling method is used. It may be another adhesive material which is light-curable and thermally curable for instance, if the cell is first assembled and then filled in a second step once the adhesive material is cured. Otherwise, a mixing of both the EC composition 7 and the adhesive material 20 may be detrimental for the device.

Except for a polyisobutylene glue, such a resin (e.g. a cationic epoxy) may be crosslinked by exposure to light and/or by thermal heating as will be described subsequently. A filled epoxy resin, once crosslinked, makes it possible to obtain a seal 11 having a good mechanical strength. Moreover, the seal 11 thus obtained is watertight and airtight.

According to one embodiment, the adhesive material 20 is compatible, or inert, with respect to the electrochromic composition 7, that is to say does not induce a chemical interaction or a degradation of the electrochromic composition 7.

According to one embodiment, the adhesive material 20 comprises spacing elements 12, such as glass beads or polymer beads. The spacing elements 12 are electrically isolating. In particular, the spacing elements 12 of the adhesive material 20 are in contact with each of the inner faces 4a, 5a of the transparent layers. The spacing elements 12 thus make it possible to define and control the height h of the seal 11 and therefore to obtain a sufficient thickness e of the cavity 6. When using a drop filling process, the spacing elements 12 may not be needed (the thickness is controlled in this case by the volume of liquid which is dispensed on one surface and by the height of the seal 11).

According to one embodiment, the adhesive material 20 also comprises a thixotropic agent. Such a thixotropic agent makes it possible to optimize the shape of the seal 11 by controlling the amount of adhesive material 20 deposited on one of the transparent layers 4, 5.

The thixotropic agent makes it possible in particular to obtain a satisfactory ratio between the height h and the width L of the seal 11. It is thus possible to obtain a cavity 6 having a sufficient thickness e, while minimizing the width L of the seal 11. This makes it possible to avoid an edge effect, that is to say a local spreading of the adhesive material 20 during the deposition thereof on the transparent layer, which would lead to a significant increase in the width L of the seal 11. As represented for example in figure 2B, the seal extends perpendicularly to the inner faces 4a, 5a, of the transparent layers 4, 5.

Furthermore, the thixotropic agent makes it possible to deposit the seal on curved surfaces while controlling the ratio between the height h and the width L of the seal. Thus, the cross section of the seal (height h and width L) remains substantially constant, even if the seal is deposited along a complex line on a curved surface, since the control of the rheology of the seal prevents the latter from spreading or slumping and does not lead to leaktightness or esthetic defects. Other additives can be used in the adhesive material 20, such as fillers, e.g. carbon black that can color the seal, etc.

The electrically conductive coatings 9, 10 of each of the transparent layers 4, 5 form electrodes which are not in direct contact with one another and are intended to be electrically connected to an external electrical source 13 such as a battery as represented in figure 1.

For this purpose, a connecting element 14, 15 (also referred to as a "bus"), that is in particular metallic may be deposited at the periphery of each of the transparent layers 4, 5 in direct contact with each conductive coating 9, 10. Each of the connecting elements 14, 15 partially, and in particular completely, surrounds each transparent layer 4, 5 at its peripheral edge 8 and in particular at the edge face of the cell 3. Each of the connecting elements 14, 15 is in particular positioned at the peripheral edge 8 of each of the transparent layers 4, 5, forming in particular an equipotential around each of the transparent layers 4, 5. The connecting elements 14, 15 are for example made of copper, of gold, of silver or of nickel. Preferably, the connecting elements 14, 15 are passivated so as not to interact with the electrochromic composition 7 and in order to prevent their corrosion.

Each of the connecting elements 14, 15 is positioned outside of the cavity 6 formed by the cell 3 and is not therefore in contact with the electrochromic composition 7 filling the cavity 6. As a variant, the seal 11 may cover, at least partially, the connecting elements 14, 15.

The seal 11 is positioned between the cavity 6 and each of the connecting elements 14, 15. In other words, the circumference of the seal 11 is smaller than the circumference of each connecting element 14, 15. Each of the connecting elements 14, 15 is thus isolated, in particular electrically isolated, from the electrochromic composition 7, in order to prevent any local malfunction of the cell 3.

Each connecting element 14, 15 preferably has a width of between 500µm and 1500µm for goggles. Each connecting element 14, 15 additionally preferably has a height of between 0.5µm and 50µm, preferentially between 1 and 30m, more preferentially still between 1 and 25µm. The total thickness of the two connecting elements 14, 15 is inevitably less than the thickness e of the cell 3, so that these two connecting elements 14 and 15 are not in contact with one another.

In order to ensure the electrical operation of the cell 3, each connecting element 14, 15 is electrically connected to a control circuit 16. The control circuit 16 is for example a miniaturized electronic control board equipped with a microcontroller that makes it possible to control the switching on, turning off and/or transmission level of the cell 3.

According to one embodiment represented for example in figure 4, the control circuit 16 is positioned directly between the two connecting elements 14, 15. The seal 11 is then not in contact with this control circuit 16 and does not interfere therewith. The control circuit 16 also comprises two faces 16a, 16b, each of the faces 16a, 16b being electrically connected, in particular in direct contact or with the aid of a conductive glue or a conductive adhesive, with a connecting element 14, 15. According to this embodiment, the height of the control circuit 16 between its two faces 16a, 16b is then equal to the thickness e of the cavity of the cell 3 minus the thickness of the connecting elements 14, 15.

According to another embodiment as represented in figure 3, the control circuit 16 is not positioned directly between the two connecting elements 14, 15. The ophthalmic device 1 then comprises a conductive intermediate element 17 (also referred to as "flex"). The conductive intermediate element 17 is preferably positioned on the nasal or temporal side of the frame 2 of the ophthalmic device 1 as represented in figure 1.

According to this embodiment, the conductive intermediate element 17 is electrically connected at a first end 17a to each of the connecting elements 14, 15 independently. The conductive intermediate element 17 may be in contact with a relatively extensive surface of each of the connecting elements 9, 10. According to this embodiment, the conductive intermediate element 17 may for example partially adopt the shape of the peripheral edge 8 of the transparent layers 4, 5 in order to facilitate the assembling thereof with the cell 3.

The conductive intermediate element 17 may thus partially or completely surround the peripheral edge 8 of each of the transparent layers 4, 5. According to this embodiment in which the conductive intermediate element 17 completely surrounds the peripheral edges 8 of the transparent layers 4, 5, it is not then necessary for the cell 3 to comprise connecting elements 14, 15, the conductive intermediate element 17 acting as connecting elements 14, 15.

Thus, as a variant, the cell 3 may not comprise connecting elements 14, 15, especially when the coatings 9, 10 described above are made from a sufficiently conductive material.

The conductive intermediate element 17 is also electrically connected at a second end 17b to the control circuit 16 to enable the operation of the cell 3 to be controlled.

### Exemplary methods for manufacturing a multilayer structure, an electrochromic cell and an ophthalmic device according to the invention:

The following exemplary methods illustrate the present invention in a more detailed, but non-limiting manner.

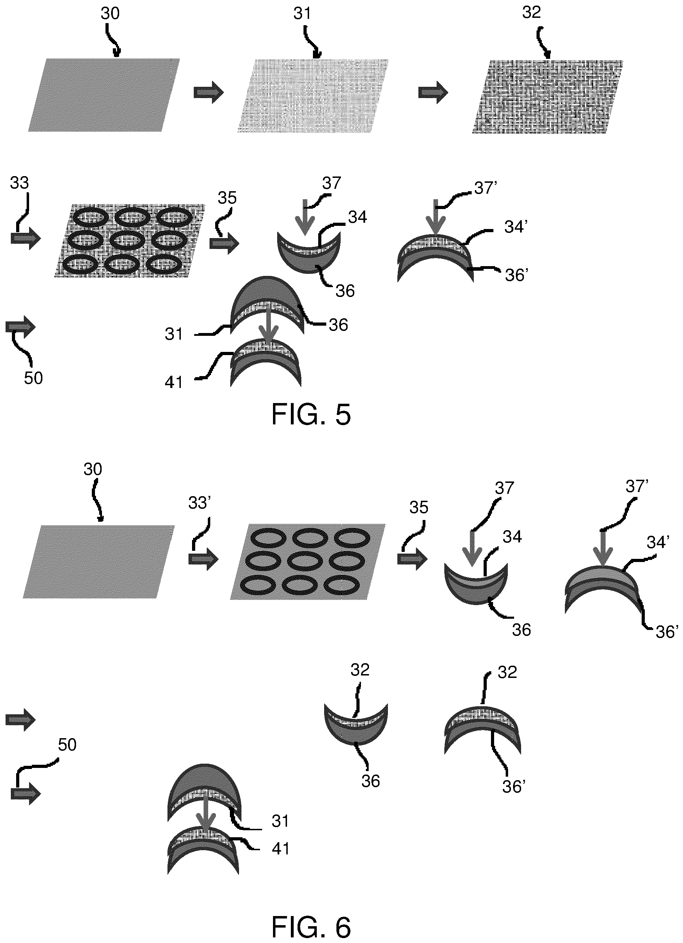

According to the invention as visible in figures 5-7, the polymer films bearing the barrier and/or electrically conductive coatings with their passivation layer are each cut to a lens shape, formed and, if needed, laminated on curved more rigid substrates like ophthalmic substrates (either on both sides or only on one side). Advantageously, these polymer films may be based on a polyester such as "PET OC50" (from Eastman, thickness of 125 µm or 175 µm, the "PET OC50" incorporating a TCO coating on it), although as explained above many other polymers may be used by way of thermoplastic polymeric film (e.g. selected from TAC, COPE, PC, COC, COP polymers, or a multilayer film of at least one of them and/or of EVOH, PVA, PCTFE, PVDC or PA).

Alternatively, EC flat devices are prepared using these polymer films and then cut, formed and, if needed, laminated on curved polymer or glass substrates. The substrate can be a piano lens, a prescription lens or a semi-finished lens. Alternatively, pieces of a flat film with a barrier coating and/or a conductive coating or an EC flat device can be formed and laminated on a curved substrate. The "sandwich" multilayer structure thus obtained can then be cut by a specific edging method to the right lens shape.

As explained above, "formed" means throughout the whole present description the result of a forming process, for example thermoformed by a thermoforming process or alternatively formed at low or room temperature.

Metallic nanowires or nanomeshes are applied for instance by spray coating, bar coating, inkjet coating, spin coating or also by screen printing on flat films, or by spray or spin coating on curved substrates. Metallic nanogrids are usually made by photolithography techniques. Since nanowires and nanomeshes are mainly available in silver, which cannot be used directly in contact with the EC formulation because it reacts electrochemically, a passivation layer is introduced according to the invention on the silver nanostructure to avoid this direct contact. This passivation layer can be applied by various techniques (e.g. PEDOT or other conductive polymer layers applied by spin, spray, inkjet or bar coating processes; gold or rhodium coating by electrochemical or electroless processes; thin layers of TCO such as ITO deposited by PVD or sputtering). Silver nanowires or nanomeshes can also be directly included in the polymer conductive coatings, as e.g. in a commercially available mixture of PEDOT and silver nanowires (e.g. from Heraeus).

According to the exemplary embodiment of a method of the invention shown in figure 5, is first visible a flat thermoplastic polymeric film, onto the top and/or bottom of which is applied a deformable barrier coating as defined above, to form a transparent flexible substrate 30.

Then, an electrically conductive layer 31 (i.e. for example a deformable electrically conductive nanostructure e.g. formed of nanomeshes, nanowires or nanogrids) and its passivation layer 32 are applied on each substrate 30, which is then successively:
- cut to a lens shape in step 33,
- formed as a curved surface 34 or 34' in step 35, and
- laminated by means of an optically transparent adhesive on a rigid curved lens substrate 36 or 36' in step 37 or 37', on a concave side and/or convex side thereof.

Alternatively, the conductive layer 31 and the passivation layer 32 are applied at the same time.

It is to be noted that the lamination of the substrates 30 on curved rigid substrates 36, 36' may not be needed if the one thermoplastic polymeric film or both films are sufficiently rigid for the targeted application.

To prepare a complete EC polymer device as the EC cell 3 disclosed above, a standard EC cell assembly/ filling process 50 is then implemented either between two formed films or two curved lenses with a laminated film or a combination of a formed film and a curved lens with a laminated film (see the mutually facing electrode layers 31 and 41 on the inner respective sides of the lenses). This assembly/ filling process may be implemented either by the drop filling (DF) technique, or by the backfilling technique (BF).

Alternatively, only one formed film or one curved lens with a laminated film on it, is used and combined with a polymer or a mineral lens (which lens may be of plano, RX or semi-finished type) bearing a conductive layer (which could be for instance made of ITO deposited by sputtering, or of nanomeshes or nanowires applied by spray coating).

According to other exemplary embodiments of a method the invention shown in figure 6, is first visible a flat thermoplastic polymeric film, onto the top and/or bottom of which is applied a deformable barrier coating as defined above, to form a transparent flexible substrate 30 as in figure 5.

Then, each thus obtained substrate 30 is cut to a lens shape in step 33', and afterwards laminated on a rigid curved lens substrate 36, 36' in step 37, 37', by means of an optically transparent adhesive (e.g. a pressure-sensitive adhesive or any other usable adhesive as defined above), on a concave side and/or convex side thereof. The side opposite this lamination can bear electrically transparent conductive coatings, e.g. of ITO provided they resist to the forming step.

Another option is to apply the electrically conductive nanostructure 31 (e.g. nanomeshes, nanowires or nanogrids) on one side of the lenses by spin or spray coating, the nanostructure being passivated to avoid a reaction with the EC formulation.

As a result, the electrically conductive layer and the passivation layer are both applied on the curved lenses.

Then, an EC cell assembly/ filling process 50 is implemented (either by the DF or BF technique) by using at least one such curved lens, or two such curved lenses (see again the mutually facing electrode layers 31 and 41).

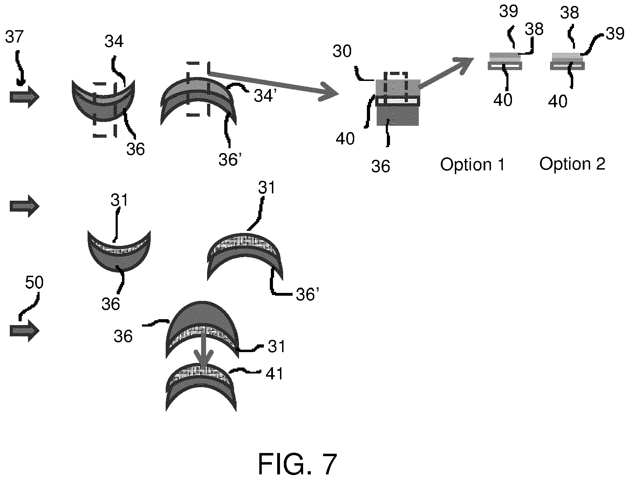

According to the exemplary embodiments of the invention for implementing the above step 37 and the whole method shown in figure 7 to laminate the formable flexible substrate 30 on the rigid lens substrate 36 via the optically transparent adhesive 40 (e.g. a pressure-sensitive adhesive), the barrier coating 38 of the flexible substrate 30 is oriented:
- according to an option 1), towards the adhesive 40, with the resulting advantage that the barrier coating 38 directly contacts the adhesive 40 and is therefore protected from scratches which could damage it; or
- according to an option 2), opposite the adhesive 40 (i.e. towards ambient air) so that the thermoplastic polymeric film 39 directly contacts the adhesive 40.

Then, the deformable electrically conductive nanostructure 31 is applied on one side of the lens e.g. by spin coating or spray coating, either on the barrier coating 38 or on the opposite side.

As a result, the electrically conductive layer and the passivation layer are both applied on the curved lenses.

Then, an EC cell assembly/ filling process 50 is implemented (either by the DF or BF technique) by using at least one such curved lens, or two such curved lenses (see the mutually facing electrode layers 31 and 41). As specified above, the barrier coatings 38 may be located:
- on the external side of the lens,
- below the conductive layers, or
- on both sides.

As explained above, an electrochromic flat film device comprising deformable electrically conductive coatings and deformable barrier layers, if needed, can also be formed at a curved shape and then laminated on curved substrates.

Alternatively, hybrid configurations are usable where one of the lenses used to make the EC cell is a mineral glass shell covered either with ITO, and the other one is covered with a passivated silver nanostructure (e.g. nanowires, nano meshes or nanogrids). The deformable conductive substrates can then be formed and laminated to either the front or the rear side of the mineral glass shell.

An electrically conductive track around each side of the lens may be needed to maintain a constant potential around the lens. This conductive track can be applied for instance by dispensing a metallic ink, like silver ink, directly on the electrically conductive layers before or after the forming or lamination processes. This ink should be compatible with the forming and lamination processes.

## Claims

1. A multilayer structure for an electrochromic cell (3), the multilayer structure comprising:
- a transparent flexible substrate (30) comprising a thermoplastic polymeric film (39), the flexible substrate (30) having two main surfaces, at least one of which is configurated to be a barrier (38) to at least one of oxygen, water vapor and solvents, and
- at least one electrically conductive layer (31) which surmounts the flexible substrate (30) to form a flexible first part of the electrochromic cell (3), the at least one electrically conductive layer (31) being configured to form an electrode of the electrochromic cell (3) and comprising a deformable electrically conductive nanostructure,
wherein said flexible first part is formed to a curved shape (34, 34') defined by a first curvature including at least one of a cylindrical, toric and spherical curvature.

2. The multilayer structure of claim 1, wherein the flexible substrate (30) further comprises a deformable barrier coating (38) in contact with the polymeric film (39) on said at least one of the main surfaces, the deformable barrier coating (38) forming said barrier to at least one of oxygen, water vapor and solvents and preferably being:
- based on at least one polymer derived from alcohol units, such as a copolymer of ethylene and vinyl alcohol (EVOH) or a poly(vinyl alcohol) (PVA), or
- an adhesive layer based on at least one polymer not derived from alcohol units, such as a polyisobutylene (PIB), or
- an inorganic or hybrid organic/inorganic gas barrier coating for example selected from Al₂0₃, Si₃N₄, SN, TiN, SiOₓN_{y}, indium tin oxide (ITO), Si0₂, Zn0₂, and Ti0₂, where x and y are greater than 0 and lower than or equal to 4.

3. The multilayer structure of claim 1 or 2, wherein the multilayer structure further comprises a transparent rigid substrate (36, 36') of thermoplastic, thermosetting or mineral glass material, which is more rigid than said first flexible first part and onto which said flexible first part (34, 34') conforms by lamination with an optically transparent adhesive (40),
and preferably wherein said transparent rigid substrate (36, 36') is thermoplastic or thermosetting, so that the multilayer structure is devoid of mineral glass.

4. The multilayer structure of claims 2 and 3, wherein the adhesive (40), preferably a pressure-sensitive adhesive or a barrier to oxygen, water vapor or solvents for example comprising a polyisobutylene (PIB), directly contacts said deformable barrier coating (38) or said polymeric film (39), preferably directly contacting said deformable barrier coating (38) to protect the same from scratches.

5. The multilayer structure of claim 3 or 4, wherein the transparent rigid substrate (36, 36') is defined by a second curvature including at least one of a cylindrical, toric and spherical curvature identical to or different from said first curvature, said rigid substrate (36, 36') being an ophthalmic lens or a semi-finished lens selected from piano lenses and prescription lenses satisfying a prescription for power correction and having a concave main face and a convex main face, said flexible first part (34, 34') contacting the concave main face and/or the convex main face.

6. The multilayer structure of any of preceding claims, wherein the thermoplastic polymeric film (39) is selected from:
- triacetate of cellulose (TAC),
- polyesters, such as polyethylene furanoate (PEF), polyethylene terephthalate (PET) or polyethylene naphthalate (PEN),
- copolyesters (COPE),
- polycarbonate (PC),
- cyclic olefin copolymers (COC),
- cyclic olefin polymers (COP), and
- multilayer films of at least one of these polymers, and/or of at least one of a copolymer of ethylene and vinyl alcohol (EVOH), a poly(vinyl alcohol) (PVA), a polychlorotrifluoroethylene (PCTFE), a polyvinylidene chloride (PVDC) and a polyamide (PA).

7. The multilayer structure of any of preceding claims, wherein said at least one electrically conductive layer (31) of said flexible first part (34, 34') comprises:
- a deformable electrically conductive nanostructure comprising a metal and selected from nanomeshes, nanowires and nanogrids and being treated with a passivation layer (32) to avoid reaction of the metal with an electrochromic formulation (7) of the electrochromic cell (3), or
- a stack of insulator layer (l1) - metal layer (M) - insulator layer (l2), where M is for example silver, gold of copper and where l1 is equal to or different from l2,
the insulator layer (l2) which is in contact with the electrochromic formulation (7) comprising a transparent conductive oxide (TCO), for example indium tin oxide (ITO), and
the other insulator layer (l1) which is in contact with the substrate comprising a transparent conductive oxide (TCO), for example indium tin oxide (ITO), or being a non-conductive layer for example able to increase light transmission through the stack or able to form a barrier layer.

8. The multilayer structure of claim 7, wherein the passivation layer (32) is:
- deposited on the deformable electrically conductive nanostructure forming said at least one electrically conductive layer (31), the passivation layer (32) preferably being an electrically conductive polymer layer such as PEDOT, a gold, rhodium, platinum or palladium-based coating or a transparent conductive oxide (TCO) coating, or else is
- directly included in said at least one electrically conductive layer (32), preferably being a mixture of the deformable electrically conductive nanostructure and of an electrically conductive polymer layer, or a mixture of the deformable electrically conductive nanostructure and of a transparent conductive oxide (TCO).

9. An electrochromic cell (3) comprising at least two transparent layers (4 and 5) having curved inner surfaces (4a and 5a) which are provided with at least one pair of electrodes (31 and 41) facing each other on the two transparent layers (4 and 5) or located on the same transparent layer (4 or 5), and which delimit between the electrodes a sealed cavity (6) filled with an electrochromic composition (7),
wherein the electrochromic cell (3) comprises at least one multilayer structure as defined in any of preceding claims, in which:
- at least one electrode of the pair of electrodes (31 and 41) comprises one said electrically conductive layer (31), and
- at least one of said transparent layers (4, 5) comprise one said formed flexible first part (34, 34'), and optionally further comprises a transparent rigid substrate (36, 36') of thermoplastic, thermosetting or mineral glass material, which is more rigid than said first flexible first part (34, 34') and onto which said first part (34, 34') conforms by lamination with an optically transparent adhesive (40).

10. An ophthalmic device (1) such as spectacle glasses, sport goggles or an augmented reality device, comprising at least one electrochromic cell (3) according to claim 9 where said at least two transparent layers (4 and 5) each comprise an ophthalmic lens or where only one said transparent layer is provided on its back side or front side with an ophthalmic lens, the sealed cavity (6) filled by the electrochromic composition (7) being delimited at the periphery by a seal (11) formed from an adhesive material (20), so that the ophthalmic device (1) meets an ophthalmic prescription of a wearer of the device (1).

11. Use of a multilayer structure according to any of claims 1 to 8 to provide an electrochromic cell (3) or ophthalmic device (1) which preferably is devoid of mineral glass and may include prescription lenses.

12. Method of manufacturing a multilayer structure according to any of claims 1 to 8, wherein the method comprises:
forming (35) said flexible first part to a curved shape (34, 34') defined by said first curvature including at least one of a cylindrical, toric and spherical curvature,
either before or after the forming step (35), cutting (33, 33') the flexible first part to an appropriate shape, such as a lens shape, for the electrochromic cell (3), and
optionally laminating (37, 37'), with intercalation of an optically transparent adhesive (40), the formed flexible first part (34, 34') on a transparent rigid substrate (36, 36') of thermoplastic, thermosetting or mineral glass material, such as an ophthalmic lens, so that the formed flexible first part (34, 34') conforms to a concave main face and/or convex main face of the transparent rigid substrate (36, 36') having a curvature that may differ from that of the formed flexible first part (34, 34'), the optically transparent adhesive (40) for example being applied before the forming step on the flexible first part in a flat shape, or being applied on the transparent rigid substrate (36, 36').

13. The method of manufacturing a multilayer structure of claim 12, wherein the method further comprises:
- before the forming step (35):
a) providing in a flat shape the transparent flexible substrate (30) comprising the thermoplastic polymeric film (39), preferably by depositing a deformable barrier coating (38) forming a barrier to at least one of oxygen, water vapor and solvents in contact with the polymeric film (39) on at least one of said main surfaces; and
- either before or after the forming step (35):
b) applying the at least one electrically conductive layer (31) on the flexible substrate (30) to form the flexible first part of the electrochromic cell (3), the at least one electrically conductive layer (31) comprising a deformable electrically conductive nanostructure comprising a metal and for example selected from nanomeshes, nanowires and nanogrids, and
c) treating the deformable electrically conductive nanostructure with a passivation layer (32) to avoid reaction of the metal with an electrochromic formulation (7),
in which steps b) and c) are implemented either successively or simultaneously:
(i) before the forming step (35), step b) comprising applying the at least one electrically conductive layer (31) on the flexible substrate (30) in a flat shape for example by spray coating, bar coating, screen printing, inkjet coating or spin coating, or
(ii) after the forming step (35), step b) comprising applying the at least one electrically conductive layer (31) on the curved flexible substrate (30) for example by spray coating, spin coating, or inkjet coating.

14. A method of manufacturing an electrochromic cell (3) according to claim 9, wherein the method comprises:
- manufacturing the multilayer structure as claimed in claim 13, in which at least one electrode of the pair of electrodes (31 and 41) comprises one said electrically conductive layer (31), and at least one of said transparent layers (4 or 5) having curved inner surfaces (4a and 5a) comprises one said formed flexible first part (34, 34') and optionally said transparent rigid substrate (36, 36') onto which said first part (34, 34') is laminated with intercalation of the optically transparent adhesive (40), and
- assembling the multilayer structure to the other transparent layer (5 or 4) which is provided with another electrode (41) facing said electrically conductive layer (31), by filling the sealed cavity (6) between the electrodes (31 and 41) filled with an electrochromic composition (7) for instance by a drop filling or backfilling technique.

15. A method of manufacturing an electrochromic cell (3) according to claim 9, wherein the method comprises:
- manufacturing a flat electrochromic cell blank, comprising assembling together said flexible first part and a second flexible substrate, and filling the sealed cavity (6) between the electrodes (31 and 41) with the electrochromic composition (7) for example by a drop filling technique,
- forming the flat electrochromic cell blank thus obtained into a curved lens shape to obtain a curved electrochromic assembly, said flexible first part and said second flexible substrate being optionally cut before obtained said curved electrochromic assembly, and
- laminating, with intercalation of an optically transparent adhesive (40), said curved electrochromic assembly on a concave main face and/or on a convex main face of at least one said curved transparent rigid substrate (36, 36'), to obtain said electrochromic cell (3), which is for example formed in between two said curved transparent rigid substrates, one of which is on the concave face of the electrochromic cell and the other one on the convex face thereof.

16. A method of manufacturing an ophthalmic device (1) according to claim 10, wherein the method comprises manufacturing the electrochromic cell (3) as claimed in claim 14 or 15, while using an ophthalmic lens for each of said transparent layers (4, 5) having curved inner surfaces (4a, 5a).
